# EUROPÄISCHE PATENTSCHRIFT

(11) **EP 1 602 066 B1**
(45) Veröffentlichungstag und Bekanntmachung des Hinweises auf die Patenterteilung: **27.12.2006**
(21) Anmeldenummer: 04719427.9
(22) Anmeldetag: 11.03.2004
(51) Int. Cl.: G06K 17/00, G07F 7/10

(54) **MODULARE BEARBEITUNGSANLAGE FÜR PERSONALISIERUNGSELEMENTE**
MODULAR PROCESSING SYSTEM FOR PERSONALISATION ELEMENTS
INSTALLATION DE TRAITEMENT MODULAIRE POUR ELEMENTS DE PERSONNALISATION

(30) Priorität: 11.03.2003 DE 10310891; 29.10.2003 DE 10350488
(43) Veröffentlichungstag der Anmeldung: 07.12.2005
(73) Patentinhaber: Mühlbauer AG, 93426 Roding (DE)
(72) Erfinder: GAMPE, Thomas, 93471 Arnbruck (DE); STEIF, Richard, 93489 Schorndorf - Obertraubenbach (DE); GÖDECKE, Alexander, 93170 Bernhardswald - Pettenreuth (DE)
(74) Vertreter: Hannke, Christian
(86) Internationale Anmeldenummer: PCT/EP2004/002501
(87) Internationale Veröffentlichungsnummer: WO 2004/081856

(56) Entgegenhaltungen:
- US-A- 5 266 781
- US-A- 6 089 457

## Beschreibung

Die Erfindung betrifft eine modulare Bearbeitungsanlage zur Bearbeitung von Personalisierungselementen, insbesondere von Chipkarten, Smartcards und/oder Magnetstreifenkarten mit einer Mehrzahl von Bearbeitungsmodulen gemäß dem Oberbegriff des Patentanspruches 1.

Personalisierungselemente wie Chipkarten, Smartcards und/oder Magnetstreifenkarten werden mittels einer Bearbeitungsanlage personalisiert. Derartige Personalisierungsanlagen sind in einer Vielzahl von unterschiedlichen Zusammensetzungen und Konfigurationen, die für ihre jeweiligen Anwendungen angepasst werden, bekannt

Bekannt ist beispielsweise eine Bearbeitungsanlage zum Personalisieren von Chipkarten, bei der einzelne Bearbeitungsmodule als selbständige Einheiten zu einer Gesamtanlage konfiguriert werden können, wobei die Reihenfolge der einzelnen Bearbeitungsmodule nahezu beliebig gestaltet werden kann. Eine derartige Bearbeitungsanlage wird in US 5 266 781 beschrieben. Die einzelnen in dieser Druckschrift dargestellten Kartenbearbeitungsmodule sind für die Personalisierung von Kreditkarten mit den Bearbeitungsschritten der Magnetstreifencodierung, des Kartenembossings und der Ausübung von Thermodruck zu Gestaltung von Bildern auf den Kreditkarten vorgesehen. Derartige Bearbeitungsanlagen können auch als kompakte Anlagen für den Bürogebrauch ausgestaltet sein.

Jedoch sind kompakte Konstruktionen bei Bearbeitungsanlagen, bei denen Bearbeitungsprozesse zum Einsatz kommen, die einen wesentlich höheren gerätetechnischen Aufwand erfordern, wie zum Beispiel das Beschriften der Karten mittels einer Laservorrichtung, bisher nicht realisierbar. Die einzelnen Bearbeitungsmodule weisen nämlich zu große und damit zu sperrige Abmaße auf. Demzufolge werden die Bearbeitungsmodule bzw. Komponenten einer Personalisierungsanlage bzw. Bearbeitungsanlage, bei der eine Personalisierung mittels einer Laservorrichtung stattfindet, von außerhalb an die eigentliche Anlage angeschlossen. Eine modulare Bauweise im obigen Sinne ist somit nicht möglich.

US 6,089,457 bildet die Basis für den Oberbegriff des Anspruchs 1 und zeigt einen Transportmechanismus für das Transportieren von Karten entlang eines Transportweges und ein Verfahren zum Betreiben desjenigen. Es werden unter anderem eine Mehrzahl von Bearbeitungsmodulen zur Bearbeitung der Karte, die linear hintereinander angeordnet sind, dargestellt. Jedes Bearbeitungsmodul umfasst ein Prozessmodul, welches oberhalb einer Tischplattenebene eines Anlagengrundgestells angeordnet ist. Sofern überhaupt ein Hinweis auf elektronische Einrichtungen zu den Modulen entnehmbar ist, wird beispielsweise von "dedicated electronics" gesprochen, die als derartiger Ausdruck nicht automatisch einen Rückschluss auf das Vorhandensein eines Moduls zum einen und auf die Anordnung dieses Moduls unterhalb der Tischplattenebene zum anderen ziehen lässt. Vielmehr können diese elektronischen Einrichtungen ebenso hinter den Modulen, gegebenenfalls auch oberhalb der Tischplattenebene, angeordnet sein.

Vielmehr werden alternative Anordnungen der Module, wie es beispielsweise in DE 101 10 414 A1 gezeigt wird, angestrebt. Bei einer derartigen Personalisierungsanlage wird ein Drehtelleranlagenkonzept verwendet, welches es ermöglicht, mindestens zwei Lasersysteme an einem gemeinsamen Drehteller mittels eines Drehtellerhandlings anzuordnen. Sämtliche Bearbeitungsmodule werden um diesen Drehteller angeordnet, so dass die Zugänglichkeit zu den entsprechenden Komponenten, beispielsweise bei Reparaturarbeiten, erschwert wird und die Anlage somit wartungsunfreundlich ist.

Die in DE 101 10 414 A1 dargestellten Personalisierungsanlagen weisen eine Multijobfähigkeit auf, dass heißt sie können mehr als einen Bearbeitungsauftrag gleichzeitig bearbeiten. Dies ist vorteilhaft bei der Anwendung der Anlagen auf die Personalisierung von Bankkarten, bei der oft eine hohe Anzahl an kleineren Mengen, nämlich sogenannte Nachproduktionen, durch die Anlage gefahren werden müssen. Um hierbei nicht immer einen neuen Bearbeitungsjob in der Anlage starten zu müssen, kann die Anlage selbständig verschiedene Jobs abarbeiten, je nach der Zusammenstellung der an die Anlage gesendeten Aufträge.

DE 197 09 561 C2 betrifft eine Personalisierungsanlage, die eine Parallelisierung einzelner Bearbeitungsschritte bzw. Prozesse durchführt, um den Durchsatz der Anlage zu erhöhen. Zusätzlich wird eine direkte Kartenübergabe von Modul zu Modul als Handlingsmodul angewendet, um damit die Anlage kompakt und klein zu halten. Diese Anlage ist ebenso multijobfähig. Derartige parallele Anordnungen einzelner Module weisen eine verringerte Zugänglichkeit bei Wartungsarbeiten als auch eine verringerte Zuverlässigkeit der gesamten Anlage in ihren Bearbeitungsschritten aufgrund der komplexen Gesamtkonstruktion auf.

Demzufolge liegt der vorliegenden Erfindung die Aufgabe zugrunde, eine modulare Bearbeitungsanlage zur Bearbeitung von Personalisierungselementen zur Verfügung zu stellen, die in ihrer Gesamtkonstruktion trotz des Einsatzes von Bearbeitungsmodulen mit hohen gerätetechnischem Aufwand übersichtlich, wartungsfreundlich und kostengünstig in ihrer Herstellung ist.

Diese Aufgabe wird durch eine Bearbeitungsanlage gelöst, die sich durch eine lineare Anordnung einzelner Bearbeitungsmodule auszeichnet, wobei die Bearbeitungsmodule jeweils in Untermodule oberhalb und unterhalb mindestens einer Tischplattenebene eines Anlagengrundgestells angeordnet sind. Zusätzlich sind auf Tischplattenebene Kabelkanäle parallel zur Längsachse der Anlagen angeordnet, um die Kabel, welche die einzelnen Module miteinander verbinden, aufzunehmen.

Die oberhalb der Tischplattenebene angeordneten Untermodule sind als eigentliche Prozessmodule ausgebildet, die sämtliche wesentliche Komponenten zur unmittelbaren Bearbeitung bzw. Personalisierung der Personalisierungselemente, wie Karten, beinhalten.

Die unterhalb der Tischplattenebene angeordneten Untermodule beinhalten hingegen elektronische Komponenten und/oder Prozesskomponenten, die zu den oberhalb der Tischplattenebene angeordneten eigentlichen Prozessmodulen zugehörig sind. Durch eine derartige Aufteilung der modularen Bearbeitungsanlage in einen oberen Bearbeitungsbereich und einen unteren Steuerungs- und Auswertebereich können platzsparend die zu den eigentlichen Prozessmodulen zugehörigen elektronischen Komponenten und/oder Prozesskomponenten unterhalb der Bearbeitungsebene angebracht werden, wobei dieser Steuerungs- und Auswertebereich mittels verkleidender Grundgestellplatten abgedeckt werden kann. Eine Übersichtlichkeit der Gesamtanlage und eine leichte Zugänglichkeit von außen sowie eine Wartungsfreundlichkeit der Anlage werden hierdurch verbessert.

Gemäß einer bevorzugten Ausführungsform sind in der Tischplattenebene eine Mehrzahl von jeweils den Bearbeitungsmodulen zugeordneten Tischplatten zum Tragen der Prozessmodule angeordnet, wobei die Tiefenabmessungen der Tischplatten geringer als die Tiefenabmessungen des sich darunter erstreckenden Anlagengrundgestells sind. Dies hat zur Folge, dass beidseitig der linear angeordneten Prozessmodule und Tischplatten jeweils mindestens einer der parallel zur Längsachse der Anlage verlaufenden Kabelkanäle zur Aufnahme der von die Module verbindenden Kabeln angeordnet werden kann. Eine derartige Anordnung der Kabelkanäle ermöglicht eine größtmögliche Übersichtlichkeit und Wartungsfreundlichkeit der Kabelverbindungen, die notwendig sind, um die Elektronik- und Prozesskomponentenmodule in dem unteren Steuerungs- und Auswertebereich mit den Prozessmodulen in dem oberen Bearbeitungsbereich zu verbinden. Zudem ist auf diese Weise ein einfaches Auswechseln einzelner Etektronikkomponenten durch ein Entfernen der zugehörigen Kabelverbindung möglich, ohne dass das zu dieser Elelctronikkomponente zugehörige Prozessmodul aus dem oberen Bereich entfernt werden muss. Dies ermöglicht bei einer auftretenden Störung der gesamten modularen Bearbeitungsanlage das schnelle Auswechseln einzelner Module und somit geringe Reparaturzeiten.

Um eine Verschmutzung der in den Kabelkanälen angeordneten Kabel und eine Behinderung durch herumhängende Kabel zu vermeiden, weisen die Kabelkanäle vorteilhaft Abdeckungen auf, die mittels Klemmverbindungen, Schamierverbindungen oder dergleichen ein schnelles Öffnen und Schließen der Kabelkanäle ermöglichen.

Vorzugsweise ist der Steuerungs- und Auswertebereich mittels Grundgestellplatten derart abdeckbar, dass eine Verschmutzung der Elektronik- und Prozesskomponentenmodule vermieden wird. Dies wirkt sich vorteilhaft auf die Haltbarkeit der Anlage aus.

Um die modulare Bearbeitungsanlage als Kompakteinheit möglichst flexibel auch für ihre Verwendung zur dezentralen Personalisierung von Karten in einem Büro insbesondere der Personalisierung von Chipkarten in einer kleinen oder mittelgroßen Anzahl zu gestalten, ist das Anlagengrundgestell bodenseitig mit rollenartigen Elementen ausgestattet, die ein schnelles Verschieben der gesamten Kompaktanlage erlauben.

Vorteilhaft können derartige Anlagen sowohl für die ID-Anwendung, bei der ein Codierungsmodul, ein Druckmodul, ein Lasennodul und ein CS-Modul sowie ein Basismodul zum Zuführen und Entnehmen der Karten, benutzt wird, als auch für eine EMV-Anwendung mit einem Basismodul, einem Magnetmodul, einem Codierungsmodul und einem Embossingmodul oder für eine GSM-Anwendung mit einem Basismodul, einem Codierungsmodul und einem Lasermodul verwendet werden. Weitere Anwendungen, die eine Mehrzahl von Modulen erfordern, sind ebenso denkbar.

Weitere Ausführungsformen ergeben sich aus den Unteransprüchen. Vorteile und Zweckmäßiglceiten sind der nachfolgenden Beschreibung in Verbindung mit der Zeichnung zu entnehmen. Hierbei zeigen:
- Fig. 1: in einer schematischen Draufsicht eine modulare Bearbeitungsanlage gemäß einer Ausführungsform der Erfindung, und
- Fig. 2: in einer schematischen Seitenansicht die modulare Bearbeitungsanlage gemäß der Ausführungsform der Erfindung.

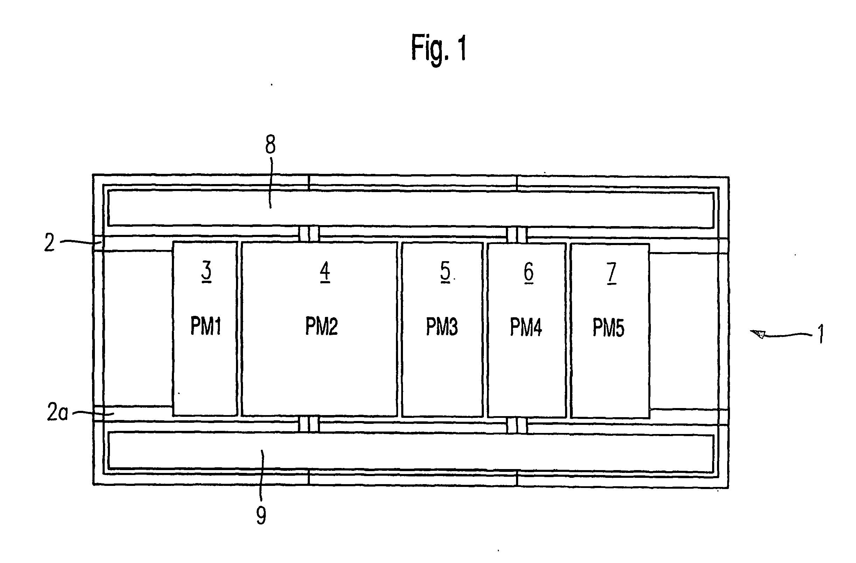

In Fig. 1 wird in einer Draufsicht eine modulare Bearbeitungsanlage gemäß einer Ausführungsform der Erfindung gezeigt. Wie der Darstellung zu entnehmen ist, weist die modulare Bearbeitungsanlage 1 ein Anlagengrundgestell 2 mit Tischplattenträgem 2a aus Aluminium-Profilstangen auf, die für ein Daraufanordnen einzelner hier nicht gezeigter Tischplatten vorgesehen sind, um darauf befestigte Prozessmodule 3, 4, 5, 6 und 7 zu stützen und mit dem Anlagengrundgestell 2 zu verbinden. Vorzugsweise lassen sich die Prozessmodule 3 - 7 auf den beidseitig angeordneten Tischplattenträgern 2a in Längsrichtung der Anlage, also nach links oder rechts, verschieben.

Sowohl die Prozessmodule als auch die darunter angeordneten Tischplatten weisen jeweils eine Tiefenabmessung auf, die geringer als die Gesarnttiefenabmessung des Anlagengrundgestelles 2 ist. Hierbei ist mit dem Begriff Tiefenabmessung dasjenige Außenabmaß gemeint, welches die Tischplatte bzw. das Grundgestell in dieser Darstellung von unten nach oben aufweist. Auf diese Weise können beidseitig der Prozessmodule 3 - 7 und der Tischplatten Kabelkanäle 8 und 9 zur Aufnahme von Kabeln angeordnet werden. Derartige Kabel dienen dazu, die oberseitig angeordneten Prozessmodule 3 - 7 mit einzelnen unterhalb angeordneten Elektronik-Racks zu verbinden. Somit ist eine Elektronikverkabelung für den Anschluss der einzelnen Prozessmodule an die darunter angeordneten Elektronik-Racks beidseitig der Prozessmodule in den Kabelkanälen 8 und 9 vorgesehen.

Durch die Anordnung der Prozessmodule auf einzelnen Tischplatten, die wiederum auf den Tischplattenträgem 2a angeordnet sind, lässt sich eine kostengünstige und kompakte Bauweise der modularen Bearbeitungsanlage erreichen. Sämtliche mechanischen und elektronischen Komponenten sowie die Prozesskomponenten sind in einer derartigen Anlage 1 untergebracht.

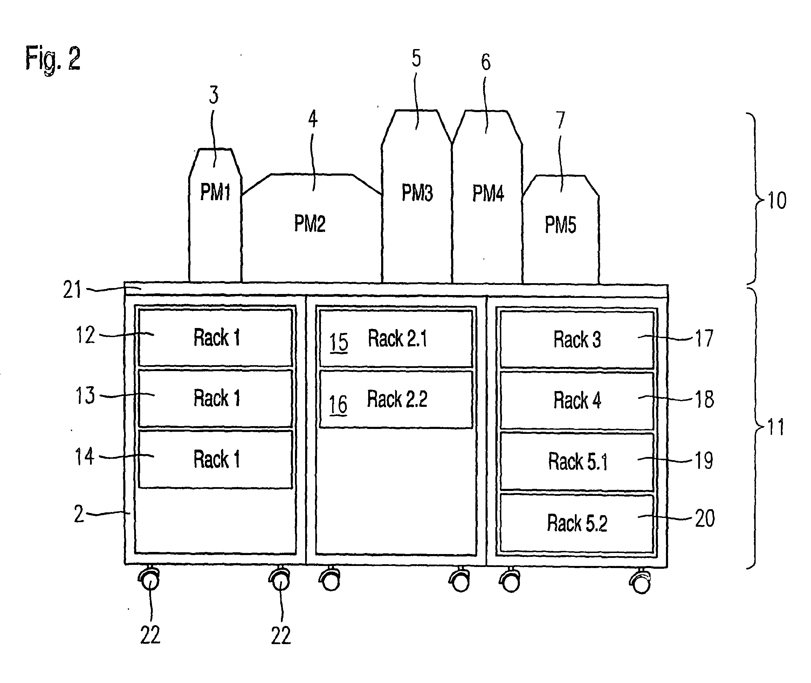

In Fig. 2 wird in einer schematischen Seitenansicht die modulare Bearbeitungsanlage gemäß der Ausführungsform der Erfindung gezeigt. Wie der Darstellung zu entnehmen ist, sind oberseitig zu einer Tischplattenebene 21 in einem Bearbeitungsbereich 10 der Anlage 1 die Prozessmodule 3 - 7 angeordnet. Unterhalb der Tischplattenebene 21 sind in einem Steuerungs- und Auswertebereich 11 die Elektronikkomponenten- und Prozesskomponentenmodule, nämlich die Elektronik-Racks 12 - 20 angeordnet. Die Anordnung der Eieletronik-Racks 12 - 20 ist vorteilhaft derart gestaltet, dass die zu einem ausgewählten Prozessmodul zugehörigen Etektronik-Racks unterhalb dieses Prozessmodules angeordnet sind.

Aufgrund der Zerlegung der einzelnen Bearbeitungsmodule in obere und untere Module weist die Anlage eine höhere Modularität gegenüber den bisher bekannten Anlagen auf. Hierfür sind die Prozessmodule 3 - 7 auf kleinen ihnen zugeordneten hier nicht gezeigten Tischplatten montiert, die sich in der Tischplattenebene 21 befinden. Derartige Tischplatten sind wiederum auf den Tischplattenträgem 2a angeordnet.

Die Anlage 1 selbst ist auf beweglichen Elementen, vorzugsweise rollenartigen Elementen 22 gelagert, so dass sie als Kompaktanlage schnell und einfach von einem in den anderen Raum verlagert werden kann.

Vorzugsweise können die Elektronik-Racks mit verkleidenden Grundgestellplatten, die hier nicht gezeigt werden, derart abgedeckt werden, dass ihre Verschmutzung von Außen vermieden wird.

Die erfndungsgemäße Anlage weist eine lineare Anordnung einzelner Prozessmodule in Verbindung mit schnellen Verarbeitungsprozessen auf, die zu einer übersichtlichen und leistungsfähigen Anlage führen. Die Zugänglichkeit und Zuverlässigkeit der Komponenten und der einfache Zugang zu dem sich in der Anlage befindenden Karten ist Grundvoraussetzung für die Akzeptanz einer Kartenpersonalisierungsanlage bei den Anwendem.

Sämtliche in der Anmeldung dargestellten Komponenten und Bauteile sind einzeln als auch in Kombination als erfindungswesentllch anzusehen. Abwandlungen hiervon sind dem Fachmann geläufig.

### Bezugszeichenliste

- 1: Modulare Bearbeitungsanlage
- 2: Anlagengrundgestell
- 2a: Tischptattenträger
- 3, 4, 5, 6, 7: Prozessmodule
- 8, 9: Kabelkanäle
- 10: Bearbeitungsbereich
- 11: Steuerungs- und Auswertebereich
- 12, 13, 14, 15, 16, 17, 18, 19, 20: Elektronik-Racks
- 21: Tischplattenebene
- 22: rollenartige Elemente

## Patentansprüche

1. Modulare Bearbeitungsanlage (1) zur Bearbeitung von Personalisierungselementen, insbesondere von Chipkarten, Smartcards und/oder Magnetstreifenkarten mit einer Mehrzahl von Bearbeitungsmodulen, wobei die Bearbeitungsmodule jeweils mindestens ein erstes und mindestens ein zweites Untermodul (3-7; 12 - 20) umfassen und linear hintereinander derart angeordnet sind, dass jeweils das erste Untermodul (3 - 7) als Prozessmodul in einem Bearbeitungsbereich (10) oberhalb einer gemeinsamen Tischplattenebene (21) eines Anlagengrundgestells (2) angeordnet ist,
**dadurch gekennzeichnet, dass**
das zweite Untermodul (12 - 20) als Elektronik- und Prozesskomponentenmodul in einem Steuerungs- und Auswertebereich (11) unterhalb der Tischplattenebene (21) angeordnet ist, wobei sich beidseitig der linear angeordneten Prozessmodule und Tischplatten in der Tischplattenebene jeweils mindestens ein parallel zur Längsachse der Anlage verlaufender Kabelkanal (8, 9) zur Aufnahme von die Module (3 - 7; 12-20) verbindenden Kabeln angeordnet sind.

2. Modulare Bearbeitungsanlage nach Anspruch 1,
**dadurch gekennzeichnet, dass**
in der Tischplattenebene (21) eine Mehrzahl von jeweils den Bearbeitungsmodulen zugeordneten Tischplatten zum Tragen der Prozessmodule angeordnet sind, wobei die Tiefenabmessungen der Tischplatten geringer als die Tiefenabmessungen des sich darunter erstreckenden Anlagengrundgestells (2) sind.

3. Modulare Bearbeitungsanlage nach Anspruch 1 oder 2,
**dadurch gekennzeichnet,dass**
die Kabelkanäle (8, 9) mit Abdeckungen versehen sind.

4. Modulare Bearbeitungsanlage (1) nach einem der vorangegangenen Ansprüche,
**dadurch gekennzeichnet, dass**
der Steuerungs- und Auswertebereich (11) mittels Grundgestellplatten abdeckbar ist.

5. Modulare Bearbeitungsanlage nach einem der vorangegangenen Ansprüche,
**dadurch gekennzeichnet,dass**
das Anlagengrundgestell (2) mittels rollenartiger Elemente (22) bewegbar ist.

## Claims

1. Modular processing system (1) for processing personalisation elements, particularly of chip cards, smart cards and magnetic strip cards, with a plurality of processing modules, whereby the processing modules each comprise at least a first and at least a second sub-module (3-7; 12 - 20) and are arranged one behind the other in a line such a way that the first sub-module (3 - 7) is respectively arranged as a process module in a processing region (10) above a common tabletop plane (21) of a system framework (2),
**characterised in that**
the second sub-module (12 - 20) is arranged as an electronic and process component module in a control and evaluating region (11) below the tabletop plane (21), whereby on both sides of the linearly arranged process modules and tabletops in the tabletop plane at least one cable channel (8, 9) running parallel to the longitudinal axis of the system is arranged for receiving cables connecting the modules (3 - 7; 12 - 20).

2. Modular processing system according to claim 1,
**characterised in that**
a plurality of tabletops, respectively assigned to the processing modules, for carrying the process modules are arranged in the tabletop plane (21), whereby the depth measurements of the tabletops are smaller than the depth measurements of the system framework (2) extending below.

3. Modular processing system according to claim 1 or claim 2,
**characterised in that**
the cable channels (8, 9) are provided with covering elements.

4. Modular processing system (1) according to one of the preceding claims,
**characterised in that**
the control and evaluating region (11) is adapted to be covered by means of framework panels.

5. Modular processing system according to one of the preceding claims,
**characterised in that**
the system framework (2) is adapted to be moved by means of roller-like elements (22).

## Revendications

1. Installation de traitement modulaire (1) permettant de traiter des éléments de personnalisation, en particulier des cartes à puce, cartes à microprocesseur et/ou cartes à bande magnétique avec une pluralité de modules de traitement, les modules de traitement comportant chacun au moins un premier et au moins un deuxième sous-modules (3 à 7 ; 12 à 20) et sont disposés de manière linéaire les uns derrière les autres, de telle sorte que respectivement le premier sous-module (3 à 7) est disposé comme module de processus dans une zone de traitement (10) au-dessus d'un plan de plateau commun (21) d'un socle d'installation (2),
**caractérisée en ce que** le deuxième sous-module (12 à 20) est disposé, comme module de composants électroniques et de processus, dans une zone de commande et d'évaluation (11) en dessous du plan du plateau (21), moyennant quoi, des deux côtés des modules de processus et des plateaux disposés de manière linéaire dans le plan de plateau, sont disposés respectivement au moins un canal à câbles (8, 9) parallèle à l'axe longitudinal de l'installation, permettant de recevoir les câbles reliant les modules (3 à 7 ; 12 à 20).

2. Installation de traitement modulaire selon la revendication 1, **caractérisée en ce que**, dans le plan du plateau (21), sont disposés une pluralité de plateaux respectivement affectés aux modules de traitement, permettant de supporter les modules de processus, les dimensions en profondeur des plateaux étant inférieures aux dimensions en profondeur du socle de l'installation (2) s'étendant en dessous.

3. Installation de traitement modulaire selon la revendication 1 ou 2, **caractérisée en ce que** les canaux à câbles (8, 9) sont dotés de revêtements.

4. Installation de traitement modulaire (1) selon l'une quelconque des revendications précédentes, **caractérisée en ce que** la zone de commande et d'évaluation (11) peut être recouverte de plaques de socle.

5. Installation de traitement modulaire selon l'une quelconque des revendications précédentes, **caractérisée en ce que** le socle de l'installation (2) peut être déplacé à l'aide d'éléments de type rouleau (22).
